(19) **Europäisches Patentamt European Patent Office Office européen des brevets**

(11) **EP 1 582 461 B1**

(12) **FASCICULE DE BREVET EUROPEEN**

(45) Date de publication et mention
de la délivrance du brevet:
**22.07.2009 Bulletin 2009/30**

(51) Int Cl.:
***B64G 1/66*** (2006.01)

(21) Numéro de dépôt: **05290533.8**

(22) Date de dépôt: **09.03.2005**

(54) **Satellite à contrôle électromagnétique d'objets**

Satellit mit elektromagnetischer Objektsteuerung

Satellite with electromagnetic object control

(84) Etats contractants désignés:
**AT BE BG CH CY CZ DE DK EE ES FI FR GB GR HU IE IS IT LI LT LU MC NL PL PT RO SE SI SK TR**

(30) Priorité: **02.04.2004 FR 0450663**

(43) Date de publication de la demande:
**05.10.2005 Bulletin 2005/40**

(73) Titulaire: **Thales**
**92200 Neuilly-sur-Seine (FR)**

(72) Inventeurs:
• **Leyre, Xavier**
**06650 Opio (FR)**
• **Sainct, Hervé**
**06110 Le Cannet (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
FR-A- 2 793 569        US-A- 6 089 510
US-B1- 6 454 215

**Description**

La présente invention concerne le domaine spatial et, plus particulièrement, un satellite apte à contrôler en vol des objets flottants dans l'espace selon des forces et des couples électromagnétiques.

Il est connu, de l'état de la technique, des satellites pour vols en formation destinés à détecter des planètes extra-solaires. Ces vols en formation nécessitent plusieurs satellites (typiquement 6) avec des exigences de positionnement relatifs extrêmement serrées. D'autres types de constellations sont envisagés dans le domaine de l'astronomie pour effectuer de l'imagerie par synthèse d'ouverture, en simulant un miroir dont les dimensions maximales correspondent à la distance maximale entre deux satellites (typiquement de l'ordre de plusieurs centaines de mètres). De telles dimensions ne sont évidemment pas compatibles avec les diamètres disponibles sous coiffe des lanceurs actuels (typiquement quelques mètres) et apportent ainsi un bond technologique majeur. L'orbite pour ce type d'application est généralement choisie parmi les points de Lagrange (L2 typiquement) pour le caractère extrêmement stable des conditions qui y règnent (thermique, gravitationnel, radiations) permettant d'implanter des charges utiles très sensibles et refroidie. Ceci implique au niveau des performances du vol en formation des précisions et des stabilités micrométriques voire nanométriques et ce sur des périodes de temps relativement longues (pouvant aller jusqu'à quelques jours).

Pour satisfaire ces besoins, la constellation doit comprendre un certain nombre de satellites, des sous-systèmes de métrologie très précis et des sous-systèmes de propulsions extrêmement précis et à bruit très réduit.

Les concepts classiquement retenus pour répondre à ce type de besoins sont basés sur n satellites identiques et autonomes, dont la propulsion est basée sur un système de tuyères réparties sur toute la constellation. Le type de tuyère utilisé s'étend de la gamme standard chimique aux tuyères ioniques ou celles dites FEEPs (de l'anglais "Field Electrical Effect Propulsions"), cette dernière technique utilisant l'application de hautes tensions sur des molécules de Césium ou Indium pour générer une très grande vitesse permettant ainsi de propulser le véhicule.

Il est bien connu que la conception des satellites dans le domaine spatial a pour contraintes permanentes celles de minimiser la masse, la puissance consommée et l'encombrement du ou des satellites, le coût global d'un satellite et sa faisabilité étant directement fonction de ces trois contraintes. L'impact sur le lanceur est aussi prépondérant directement au niveau de la masse. Ceci est d'ailleurs encore plus justifié dans le cadre d'une constellation à n satellites .

Pour se conformer à ces différentes contraintes, des concepts de vol en formation utilisent n satellites identiques se propulsant avec des tuyères de diverses technologies, d'autres concepts font appel à un mélange de nano et microsatellites pour accomplir des missions réduites ou simplifiées. Mais, dans tous les cas connus, chaque satellite est autonome et doit comporter tous les sous-systèmes classiques. D'autre part, l'utilisation de nano ou microsatellites a pour inconvénient majeur de réduire l'étendue de la mission et son intérêt final. Il faut d'ailleurs souligner que de nombreux projets, tels que ceux à l'origine du développement des vols en formation, ne peuvent se satisfaire de version réduite et minimaliste des satellites que sont les nanosatellites.

US6454215 décrit un véhicule spatial pour la commande précise d'une charge utile en isolant des vibrations et des gênes à la charge utile

La présente invention vise donc à fournir une approche globale du concept de vol en formation en minimisant les masses, volumes, puissances et coûts associés.

A cet effet, l'approche fondamentalement innovante est de considérer la formation en vol comme un tout et non pas comme une addition de n satellites identiques, fussent-ils nano ou microsatellites.

Dans cette perspective, l'invention propose notamment de simplifier et de spécialiser au maximum le rôle de chaque élément du satellite, de façon à optimiser le système final. En particulier, selon l'invention, le rôle d'un tel satellite peut être séparé en deux fonctions totalement différentes : une fonction déportée, par exemple, de concentration de faisceaux reçus et/ou émis, et une fonction de traitement de ces faisceaux. Dans la suite, la fonction de concentration sera remplie par une entité dénommée "objet libre", en référence à un objet libre flottant dans l'espace et au voisinage du corps du satellite. La deuxième fonction de traitement sera remplie par le corps du satellite, partie centrale dénommée par la suite "corps principal" (qu'on pourrait assimiler à l'expression "hub" en anglais) par référence à la combinaison dans ce corps de toutes les fonctionnalités, notamment "intelligentes", du satellite, hormis celle de l'objet libre de concentration des faisceaux reçus de la Terre ou une autre origine vers le corps principal et/ou émis par le corps principal sur l'objet libre à destination de la Terre ou une autre destination.

L'invention consiste ainsi à considérer les objets libres comme des concentrateurs indépendants et flottants dans l'espace sans autre but que de renvoyer le faisceau considéré vers le corps du satellite et/ou d'émettre le faisceau provenant du satellite vers une destination prédéterminée. Ce faisant, l'invention permet de réduire au strict minimum le concept d'objet libre, permettant, de la sorte, de minimiser les paramètres de masse, volume et puissance sans pour autant réduire la portée de la mission choisie.

A cet effet, l'invention a pour objet un véhicule spatial tel que revendiqué dans la revendication 1.

Ainsi, l'invention prend avantage de la suppression d'actionneurs à base de tuyères, qu'elle qu'en soit le type, sur les objets libres par leur remplacement par des actionneurs magnétiques. Le corps du satellite crée lui-même un champ magnétique sur lequel s'"appuieront" le ou les objets libres avec leurs bobines électromagnétiques.

On notera que, grâce à l'invention, il n'est plus indispensable d'utiliser des roues d'inertie ou de réaction pour assurer l'orientation d'attitude des objets libres et on peut désormais se reposer entièrement sur les interactions des champs magnétiques du corps avec le ou les objets libres.

Selon un mode de réalisation de l'invention, la charge utile de l'objet libre est réduite aux moyens pour assurer la réflexion de rayons du spectre visible, UltraViolet ou InfraRouge, du type miroir, et/ou du spectre invisible, du type antenne de transmission de faisceaux électromagnétiques.

Selon un mode de réalisation de l'invention, le corps principal comporte les moyens pour assurer les fonctions "intelligentes" du véhicule, du type appartenant au groupe {calculateur central, mémoire de masse et puissance de calculs, communications avec la Terre, charge utile autre que celle embarquée sur l'objet libre et traitement de données associées, enregistrement des données, synchronisation, FDIR}.

Ainsi, l'invention consiste à déporter toutes les fonctions associées dans le corps et à profiter au maximum du caractère commun de l'intelligence.

Selon un mode de réalisation de l'invention, l'objet libre comporte des moyens de localisation de l'objet libre, au moins un premier actionneur électromagnétique comportant au moins une première bobine électromagnétique destinée à générer une force et un couple électromagnétiques, au moins un magnétomètre pour mesurer une information de champ magnétique local, des moyens de télécommunication de ladite information de champ magnétique local,

- le corps principal comporte un calculateur central pour déterminer le courant à injecter dans ladite bobine pour corriger lesdits force et couple électromagnétiques en fonction de la position et de l'attitude de l'objet libre souhaitée.

Selon un mode de réalisation de l'invention, le corps principal comporte lui-même au moins au moins un actionneur grossier et inertiel, par exemple à base de tuyères, et au moins un actionneur électromagnétique comportant au moins une seconde bobine électromagnétique destinée à générer une force et un couple électromagnétiques propres.

Selon un mode de réalisation de l'invention, les moyens de localisation de l'objet libre comportent des moyens de réception d'informations provenant d'un senseur d'étoiles pour connaître la position inertielle de l'objet libre et des moyens de positionnement relatif par RF, du type GPS (on comprendra ici bien évidemment que la fonctionnalité GPS en elle-même n'est pas utilisée, mais c'est uniquement le type standard d'émetteur/récepteur GPS qui est réutilisé).

Selon un mode de réalisation de l'invention, le lien RF des moyens de positionnement relatif grossier est utilisé en tant que bus interne de transmission de données entre le corps principal et ledit au moins un objet libre.

Selon un mode de réalisation de l'invention, un pseudo-satellite, dénommé "satellite-gueuse", est utilisé dans l'espace libre pour absorber les incréments/décréments de moments cinétiques embarqués dans le système véhicule {corps principal - objets libres}.

Selon un mode de réalisation de l'invention, le véhicule comporte plusieurs objets libres et en ce que la gestion de contrôle de position de ces objets libres consiste à créer un champ magnétique pulsé et à, alternativement, allumer et éteindre les actionneurs électromagnétiques respectifs de chaque objet libre suffisamment rapidement pour que l'inertie respective des objets libres rende le pointage insensible à ce pilotage.

Selon un mode de réalisation de l'invention, le véhicule comporte plusieurs objets libres et en ce qu'au lancement, les objets libres sont empilés avec des mécanismes de fixation et de gerbage du type à verrouillages électromagnétiques.

D'autres caractéristiques et avantages de l'invention apparaîtront à l'examen de la description détaillée ci-après, et des dessins annexés, sur lesquels :

- la figure 1 représente, de façon schématique, un corps principal accompagné de deux objets libres selon un premier mode de réalisation de l'invention,

- la figure 2 représente, de façon schématique, les blocs fonctionnels du corps principal et de l'objet libre selon un second mode de réalisation de l'invention.

Dans la suite, les éléments remplissant des fonctions identiques ou similaires porteront les mêmes références.

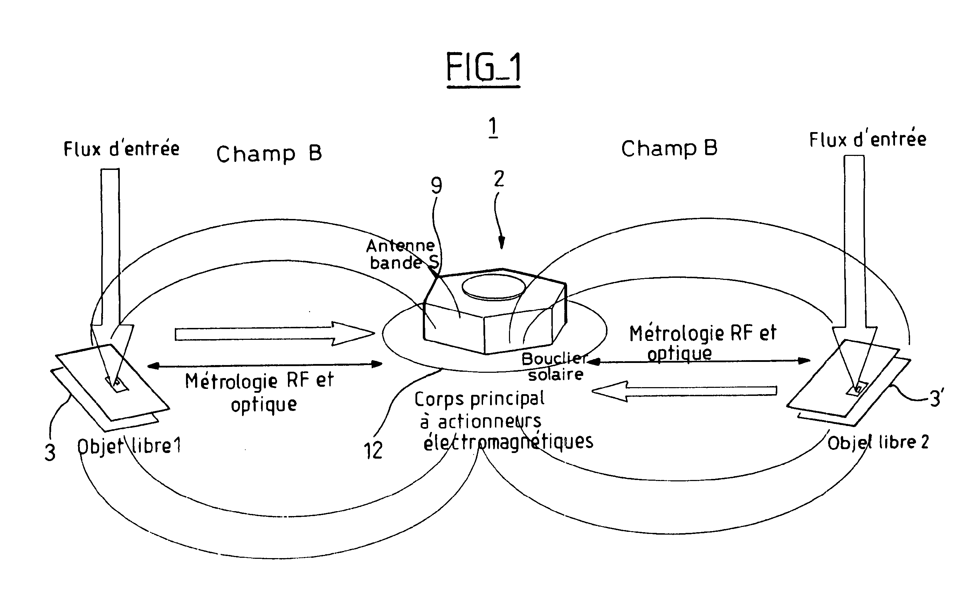

La figure 1 représente un satellite 1 constitué d'un corps principal 2 accompagné de deux objets libres 3 et 3'.

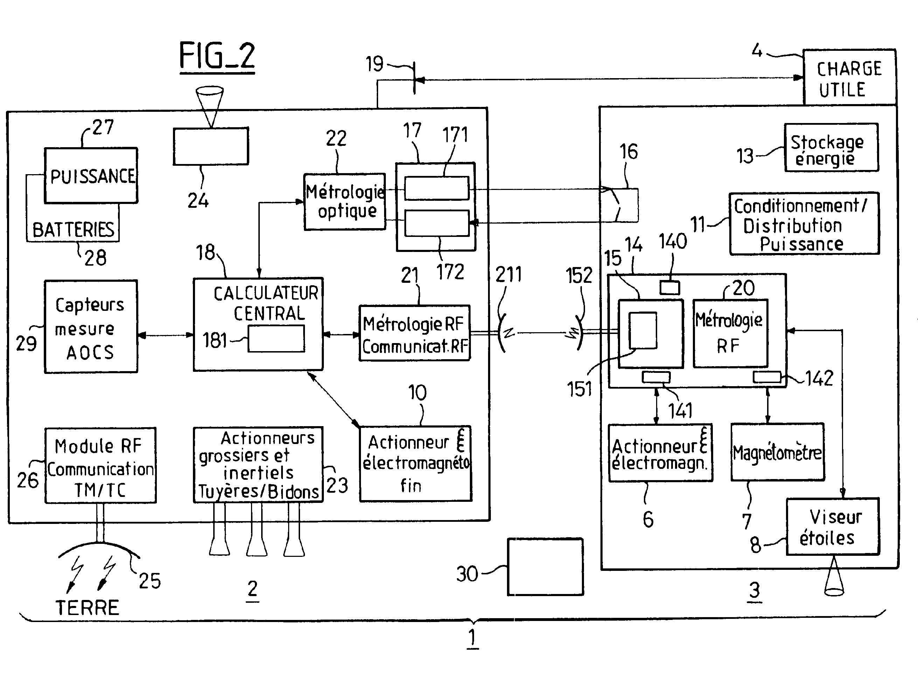

Dans la suite, on se référera également à la figure 2 illustrant, de façon schématique, les blocs fonctionnels du corps principal 2 et de l'objet libre 3.

L'objet libre 3 comporte une charge utile 4 qui peut se réduire à un miroir plan (mais qui pourrait avoir une forme quelconque) monté sur une structure 5 parallélépipédique très simple, recouverte de cellules solaires (non illustrées) sur toutes les autres faces du parallélépipède.

L'intérieur de la structure 5 est réduite au strict minimum, à savoir notamment un boîtier électronique 14 de commande d'actionneurs 6 magnétiques fins, de magnétomètres 7 et d'un viseur d'étoiles 8 (en anglais "startracker").

Les actionneurs 6 situés à l'intérieur de cette structure sont constitués par des bobines électromagnétiques 6 soit à air, soit à noyau ferromagnétique, soit à supraconducteur en fonction des champs à considérer. Le nombre d'actionneurs 6 est variable et dépend du nombre d'objets libres 3 de la constellation mais doit au minimum permettre de générer des forces et des couples dans les trois directions. Selon un premier mode de réalisation, il est envisagé d'implanter ces bobines 6 comme des trièdres placés aux huit coins du parallélépipède 5. Cet agencement permet d'intégrer ces bobines à la structure tout en disposant de huit bobines 6 trois axes. Selon une variante, d'autres bobines peuvent être ajoutées à l'intérieur de la structure si nécessaire. Selon une autre variante, une seule bobine par axe est utilisée pour simplifier la loi de contrôle.

Le sens du courant circulant dans chacune de ces bobines permet de plus de maîtriser, de façon connue en soi, le sens des forces et des couples générés. Les magnétomètres 7 sont placés à proximité de ces bobines 6 pour mesurer le champ présent et calculer les courants à injecter dans les bobines pour optimiser les couples et forces induites en fonction de l'attitude désiré de l'objet libre 3. Le nombre de magnétomètres sera égal au nombre de trièdres mais pourrait être différent et minimisé.

Le dimensionnement des actionneurs 6 dépend essentiellement de la distance inter-satellites et des forces et couples à générer pour contrôler le système {corps principal - objet libre}. L'exemple de dimensionnement pris prend en compte une orbite de type L2. Les forces et couples perturbateurs sont sur ce type d'orbite dans l'ordre décroissant d'importance :

- pression solaire,

- Emission infrarouge,

- Vent solaire,

- Pression RF,

- Couple Magnétique (parasite).

Le dimensionnement de ces forces dépend essentiellement de la surface considérée. La surface dépend de l'implantation d'un pare-soleil 12 pour protéger les moyens optiques et les moyens récepteurs/émetteurs.

Cependant, dans le mode de réalisation de la figure 1, l'invention permet facilement de limiter l'importance, voire de supprimer totalement la nécessité d'un pare-soleil de part la forme même de la structure et la position et la taille du miroir. En effet, le miroir étant plan, le pare-soleil n'est plus utile. L'invention permet donc de minimiser, de facto, les forces et les couples perturbateurs qui vont agir sur les objets libres et permet donc de facto une meilleure précision de pointage et de contrôle .

Pour des satellites « classiques » à mission astronomique prévus pour ces types d'orbite, des forces et des couples de l'ordre de 200 microN et 200 microNm sont estimées pour des surfaces de l'ordre de 100 m2 . On voit ici que les surfaces pourraient être réduites à quelques mètres carrés, réduisant de façon proportionnelle les couples et les forces perturbateurs différentiels induits.

Néanmoins, à titre de dimensionnement et de marge, nous considérerons un dimensionnement des forces à générer de l'ordre de 100 microN. Les bras de leviers considérés seront de l'ordre du mètre.

Les distances à considérer seront de l'ordre de 250 m maximum.

Les forces électroagnétiques considérées sont déduites de la formule suivante :

$$F = 3/2 . \pi . \mu_0 . (\chi . n . I . a^2)_1 . (\chi . n . I . a^2)_2 / D^4$$

$\mu_0$ :   perméabilité du vide
$\chi$ :   perméabilité du noyau magnétique
n :   nombre de tours par mètre
1 :   intensité du courant dans une bobine
a :   rayon d'une bobine
D :   distance entre deux satellites
½ :   bobine numéro 1 / 2

Il est à noter que la perméabilité du noyau magnétique est non linéaire et saturé.

La définition du couple se dérive de façon connue par un facteur multiplicateur qui correspond à la distance entre le corps et l'objet libre.

On notera que le concept de l'invention impliquant un corps principal avec un ou plusieurs objets libres en interaction avec le corps principal s'applique dans une configuration où la constellation {corps principal - objets libres} soit fixe ou bien en rotation lente. La force centrifuge associée est de l'ordre du millinewton à 250 m pour des objets libres de 500kg pour un tour par jour.

Il est aussi à noter que la création du champ magnétique par le corps principal peut être réalisé soit par une bobine équivalente 10 soit par un aimant permanent 10'. L'avantage de la ou des bobines réside particulièrement dans la flexibilité de commande et de sens des champs générés. La loi de contrôle du champ généré peut être soit de créer un champ fixe, soit de créer un champ pulsé et alternativement d'allumer et d'éteindre les bobines de chaque objet libre suffisamment rapidement pour que l'inertie respective des objets libres 3, 3' rende le pointage insensible à ce pilotage.

L'utilisation de matériaux supraconducteurs permet évidemment d'étendre la portée de l'invention, l'utilisation de ces matériaux supraconducteurs sur le marché actuellement étant réaliste dans le sens où les températures d'utilisation des plans focaux des instruments sont de l'ordre de 40K, soit largement inférieures aux températures requises pour assurer la supraconductivité des matériaux connus actuels .

La génération de puissance réalisé par le bloc de conditionnement de puissance 11 intégré dans le boîtier électronique unique 14 se fera grâce à la couverture isotrope des cellules solaires (également sur la face miroir mais de façon moindre). Le dimensionnement sera réalisé de manière à ce que, quelque soit l'attitude considéré de l'objet libre, le bilan de puissance soit toujours suffisant. Ceci permet de simplifier au maximum ce système tout en minimisant les contraintes induites et sans imposer aucune contrainte quant à l'attitude de l'objet libre, même en cas de panne. En fonction du type d'orbite considéré (L2, autres), et de la durée de la mission, un bloc 13 de stockage d'énergie intégré dans le boîtier électronique unique (typiquement à base de batteries ou de super-capacités) sera mise en place. On notera que les blocs 11 et 13 de conditionnement, stockage et distribution d'énergie, au vu de la puissance peu élevée de part l'objet libre réduit, peuvent être intégrés à l'intérieur du boîtier unique 14.

Certains profils de mission, en particulier en L2, permettent de s'en affranchir. Le budget global de puissance considéré est minimal : de l'ordre de 100W, permettant d'alimenter dans tous les cas de figures le viseur d'étoile (<10W), les bobines électromagnétiques (<40W), l'électronique de commandes et les magnétomètres (<20W), ainsi que le bloc radio-fréquence de communication avec le corps principal (<10W). Ce dimensionnement en L2 représente une surface de cellules solaires de moins d'un mètre carré. Cette surface est évidemment aisément accessible.

La redondance va dépendre du nombre d'éléments dans la constellation {corps principal - objets libres} et de la philosophie globale retenue concernant la gestion des modes de pannes de celle-ci. Sur un grand nombre d'objets libres et eu égard à l'extrême simplicité et le coût réduit de ces objets libres, un objet libre non redondé paraît être une bonne approche système. Dans des cas particuliers où les objets libres seraient en nombre restreint, une philosophie de redondance suivante peut être implanté :

- redondance chaude de l'électronique,

- redondance de toutes les cartes et du viseur d'étoiles,

- ainsi que doublement de toutes les bobines sur chaque noyau ferromagnétique.

On voit ici qu'avec ou sans redondance mise en oeuvre dans les objets libres, l'invention propose un concept simple et très fiable par rapport aux concepts à tuyères et à roues.

La régulation thermique de l'objet libre sera réalisée essentiellement de façon passive, un réchauffeur de survie (non illustré) pourra être monté piloté par un thermostat si le bilan radiatif montrait un problème en cas de panne. Il s'agit seulement d'un déclenchement sur seuil bas sans besoin de précision.

Un dispositif de localisation 15 utilise essentiellement les informations provenant des deux dispositifs suivants : le senseur d'étoiles permettant de connaître la position inertielle de l'objet libre ainsi que de dériver les vitesses de rotations sur ces trois axes, et un dispositif de positionnement 151 par radio fréquence. Ce dispositif de positionnement par radio fréquence comprend des émetteurs-récepteurs 152 omnidirectionnels en bande S (par exemple, de type récepteurs/émetteurs GPS Topstar 3000 Alcatel marque déposée). Le nombre de ces récepteurs/émetteurs 152 peut être variable, mais une accommodation typique omnidirectionnelle conduit à aménager 3 antennes en position de triangle équilatéral sur chacune des deux grandes faces dudit parallélépipède. L'électronique de commande et de contrôle est incluse dans une carte dédiée dans le boîtier électronique unique.

L'autre avantage de cette utilisation est que dans le cas d'une orbite terrestre basse (LEO), l'utilisation du système GPS peut être envisagé pour chaque objet libre sans coût additionnel .

Les autres systèmes de métrologie fines (senseurs latéraux fins et grossiers, senseurs longitudinaux fins et grossiers) sont constitués de réflecteurs passifs 16 (type oeil de chats ou coins de cube représentés sur la figure 2) situés sur les coins de l'objet libre (un par face, localisé sur une extrémité). Ainsi, un récepteur/émetteur 17 comprenant un émetteur 171 d'un rayon laser et un récepteur 172 sera apte, après localisation grossière par le dispositif de localisation 15, de localiser finement, via la transmission d'un rayon laser sur le coin de cube 16, l'objet libre.

Le boîtier électronique 14 doit donc inclure les fonctionnalités suivantes :

- moyens de conditionnement, protection et distribution 11 de la puissance (100W dans le cas présent) fournie par les cellules solaires, y compris pour le senseur d'étoile,

- moyens électroniques de commande et de contrôle 140 du dispositif de positionnement RF 151,

- moyens électroniques de commande et de contrôle 141 des actionneurs électromagnétiques 6,

- moyens électroniques de commande et de contrôle 142 des magnétomètres 7,

- moyens électroniques d'adaptation, tête de bus Radio Fréquence, qui est détaillé ci-dessous.

L'une des caractéristiques de l'invention est en effet d'utiliser le lien Radio-Fréquence du dispositif de positionnement relatif des objets libres en tant que bus interne de transmission de données du système de la constellation {corps principal - objets libres}. A cet effet, un dispositif de métrologie RF 20 est relié au dispositif de localisation 15 et communique à un dispositif central 21 de métrologie RF et de communication RF établi au sein du corps principal. Ce dispositif 21 émet/reçoit les données sur le bus interne de transmission via une antenne d'émission/réception 211. Le dispositif central 21 de métrologie RF et de communication RF et relié à une entrée/sortie d'un calculateur 18. Ainsi le calculateur central 18, localisé dans le corps principal, « verra » virtuellement tous ses abonnés connectés à un bus « interne » de données (qui pourra être, par exemple mais non limitativement, du type Mil-STD-1553, bus de données série standard dans le domaine satellite) de façon logique, sans avoir à connaître la localisation géographique de ses abonnés (sur le corps principal ou sur l'objet libre numéro n) .

La bande passante permise par cette liaison radio fréquence sera prédéterminée de manière à permettre de mettre en oeuvre une telle relation.

De son coté, le corps principal 2 intègre tous les autres moyens pour assurer les différentes fonctionnalités de la constellation, en particulier ceux déjà connus de l'Homme du Métier, à savoir :

- un instrument global 19 : traitement optique et électronique des données reçues par la charge utile qui est dans le présent exemple un miroir, exemple non limitatif de la charge utile qui peut constituer en un miroir de transmission de rayons du spectre visible ou invisible, ce dernier cas étendant la fonction de la charge utile embarquée à celle d'une antenne de télécommunications),

- le calculateur central 18 de bord,

- un dispositif central 22 de métrologie optique fine, émettant/recevant les informations émises/reçues sur/du coin de cube16 pour les transmettre au calculateur 18 afin d'ajuster de façon fine la position du corps 2 et de l'objet libre 3,

- le dispositif central 21 grossier de métrologie RF et de communication RF,

- une mémoire 181 de masse,

- des actionneurs 23 grossiers et inertiels comprenant des tuyères / autres et des bidons correspondants,

- des détecteurs (non représentés) de franges,

- ainsi que les équipements suivants, eux aussi connus en soi : senseurs d'étoiles 24, gyroscope (non représenté), senseur de soleil (non représenté), module RF 26 de communication TM/TC relié d'une part au calculateur central 18 et d'autre part à une antenne 25 de communications avec la Terre, un générateur de puissance 27 couplé à des batteries 28, des capteurs 29 de mesure (senseurs) AOCS classiques, etc ...

Tous ces équipements, connus en soi, n'ont pas été décrits en détail car connus par l'Homme du Métier, et ce dernier pourra, pour plus de détails, se référer par exemple à l'ouvrage "Satellite Communications Systems" Fourth Edition, de Gérard Maral et Michel Bousquet, Edition John Wiley & Sons, Ltd.

La génération du champ magnétique B global pour la constellation est faite à partir du corps principal 2 soit à partir de bobines électromagnétiques classiques, soit supraconductrices soit dans certains cas à partir d'aimants permanents, comme déjà dit.

La configuration retenue au lancement sera celle du corps principal 2 sur lequel seront empilés les objets libres 3, 3' avec des mécanismes de fixation et de gerbage "doux" (typiquement des verrouillages électromagnétiques).

Le corps principal 2 assurera toute la phase de croisière avec ses actionneurs inertiels jusqu'au positionnement final en orbite de mission. Une fois toute les corrections d'orbite effectuée, alors la phase de séparation aura lieu. Les objets libres seront séparés les uns après les autres, avec des vitesses initiales très faibles et contrôlées dès le début par les actionneurs électromagnétiques favorisés par des distances extrêmement faibles et donc des forces disponibles très importantes .

Une fois la constellation établie dans sa configuration géométrique standard et souhaitée, des orientations inertielles pourront être effectuées via le corps principal et les directions et attitude relatives inter-satellites faites par les actionneurs électromagnétiques. Les tuyères du corps principal permettront de corriger les écarts inertiels et les rotations induites.

Dans le cas où la précision des tuyères ne suffiraient pas pour corriger les écarts inertiels et les rotations induites, selon une variante avantageuse de l'invention, il est prévu d'implémenter un pseudo-satellite 30 additionnel dénommé "satellite-gueuse" ou "gueuse" et dont le but serait d'encaisser les deltas inertiels engendrés par les corps utiles du système {corps principal - objets libres}. En utilisant le principe de la conservation du moment cinétique, le satellite-gueuse absorberait les incréments/décréments de moments cinétiques embarqués de la constellation {corps principal - objets libres}. Ce satellite-gueuse déporté pourrait être extrêmement simple n'ayant aucune précision ni attitude requises, ni aucun positionnement à respecter, excepté évidemment celui de non-collision avec les autres éléments de la constellation.

Au niveau de l'anticollision, il est à noter une option avantageuse d'anticollision passive, cette option étant en complément de l'utilisation active de forces électromagnétiques de contrôle. Cette option passive consiste à charger chaque élément de la constellation {corps principal - objets libres - gueuse} d'une même quantité de charge électrique. Cela a pour effet de produire une force répulsive à faible distance, cette force répulsive étant destinée à s'évanouir et à devenir négligeable lorsque les éléments sont éloignés d'une dizaine de mètres de distance les uns des autres et n'interfèrera pas avec les forces électromagnétiques classiques de contrôle.

Ceci permettra de simplifier l'analyse anticollision des modes de défaillance - détection - Isolation ou FDIR ("Failure Detection Isolation Recovery" en anglais). Il suffira de couper les courants dans les bobines des objets libres pour annuler toute force induite et laisser les forces électrostatiques oeuvrer. Le dimensionnement des charges dépendra uniquement des vitesses initiales tolérables inter-satellites .

En résumé, l'invention permet d'optimiser le concept de vol en formation en considérant le satellite comme un tout et en spécialisant chacune de ses parties en sa fonction première. En particulier, les objets libres sont réduits au rôle de renvoi/transmission de rayons (qu'ils soient dans le spectre du visible ou de l'invisible) et deviennent des miroirs volants, mus par des moyens de propulsion électromagnétique dont le champ magnétique est crée par le corps principal (satellite central). Le corps principal concentre toutes les autres fonctions et crée le champ magnétique pour toute la constellation d'objets libres. Le corps principal agit inertiellement globalement sur la constellation à travers d'actionneurs inertiels implantés seulement sur ce corps principal. Le sous-système de communication RF objets libres - corps principal est utilisé en tant que bus de données interne virtuel de la constellation. Une option avantageuse de l'invention est d'implanter un nouvel élément de la constellation appelée satellite-gueuse qui permet d'"encaisser" les variations de moment cinétique globale du système constellation {corps principal - objets libres - gueuse}, permettant ainsi de réduire le rôle des actionneurs inertiels implantés dans le corps principal. Une charge électrostatique globale peut être générée sur chaque élément de telle façon qu'à courte distance une force répulsive se crée et empêche la collision. Cette force disparaît totalement à quelques dizaines de mètres .

On remarquera que la présente invention a un domaine d'application très large, outre le cas d'application mentionné ci-dessus :

- vol en formation en orbite L2 pour des missions astronomiques,

- vol en formation en orbite GEO ou LEO pour des missions astronomiques, d'observation

- vol en formation générique, quelque soit la mission,

- vol en formation dégénéré pour contrôle en asservissement très précis.

On peut considérer qu'une option de l'invention est d'utiliser le concept de vol en formation à base d'actionneurs électromagnétiques de façon dégénéré avec un satellite-gueuse. Ce concept par exemple peut être appliqué à un satellite d'astrométrie positionné en L2 pour mesurer des écarts angulaires de l'ordre de la microarcseconde et ayant besoin d'actionneurs d'une précision inférieur au microNewtons) .

Dans ce cas d'application, le satellite-gueuse consiste en un élément très simple incluant les bobines de génération de champ magnétique, et un dispositif de localisation très grossier permettant une localisation de l'ordre du mètre. Le système d'anticollision passif électrostatique peut être implémenté. Le satellite d'astrométrie embarque alors des bobines suivant trois directions redondés et multipliés de façon à faire tous les couples nécessaires et se pilote sur le champ B créé par le satellite-gueuse à quelques dizaines de mètres . Les forces en jeu sont très largement suffisantes (> 10 mN) et extrêmement précises (< 1 microN) avec des bruits extrêmement réduits (pilotage en courant des bobines). Le pointage inertiel est assuré via un système de pointage classique des satellites astrométriques, le satellite-gueuse encaissant les dérives dû au système isolé.

**Revendications**

1. Satellite (1) comprenant un corps principal (2), le satellite comportant en outre, en orbite :

   - au moins un objet (3) libre flottant dans l'espace comportant une partie de la charge utile (4) déportée du corps principal, l'objet libre étant astreint à une position et une attitude précise par rapport au corps principal,
   - des moyens (6,7,10,14,18,21 ,17,22) pour générer une force et un couple électromagnétiques de manière à pouvoir commander la position et l'attitude de l'objet libre selon une relation de maître - esclave ; **caractérisé en ce que** chaque élément du système {corps principal - objets libres} est chargé d'une quantité de charge électrique identique, ayant pour effet de produire une force répulsive à faible distance, cette force répulsive étant destinée à s'évanouir et à devenir négligeable lorsque les éléments sont éloignés d'une distance prédéterminée les uns des autres et n'interférera pas avec les forces électromagnétiques de contrôle, cet agencement de charge générant un système anticollision passif à courte distance basé sur l'auto-répulsion électrostatique.

2. Satellite selon la revendication 1, **caractérisé en ce que** la partie de charge utile de l'objet libre est réduite aux moyens pour assurer la réflexion de rayons du spectre visible, UltraViolet ou InfraRouge, du type miroir, et/ou du spectre invisible, du type antenne de transmission de faisceaux électromagnétiques.

3. Satellite selon l'une des revendications 1 à 2, **caractérisé en ce que** le corps principal comporte les moyens pour assurer les fonctions "intelligentes" du type appartenant au groupe {calculateur central, mémoire de masse et puissance de calculs, communications avec la Terre, charge utile autre que celle embarquée sur l'objet libre et traitement de données associées, enregistrement des données, synchronisation, FDIR}.

4. Satellite selon l'une des revendications 1 à 3, **caractérisé en ce que** :

   - l'objet libre comporte des moyens (15,16,140) de localisation de l'objet libre, au moins un premier actionneur (6) électromagnétique comportant au moins une première bobine (6) électromagnétique destinée à générer une force et un couple électromagnétiques, au moins un magnétomètre (7) pour mesurer une information de champ magnétique local, des moyens (20,152) de télécommunication de ladite information de champ magnétique local,
   - le corps principal comporte un calculateur central (18) pour déterminer le courant (I) à injecter dans ladite bobine (6) pour corriger lesdits force et couple électromagnétiques en fonction de la position et de l'attitude de l'objet libre souhaitée.

5. Satellite selon la revendication 4, **caractérisé en ce que** le corps principal comporte lui-même au moins au moins un actionneur (23) grossier et inertiel, par exemple à base de tuyères, et au moins un actionneur électromagnétique (10) comportant au moins une seconde bobine (10) électromagnétique destinée à générer une force et un couple électromagnétiques propres.

6. Satellite selon la revendication 4 ou 5, **caractérisé en ce que** les moyens (15) de localisation de l'objet libre comportent des moyens de réception d'informations provenant d'un senseur d'étoiles pour connaître la position inertielle de l'objet libre et des moyens de positionnement relatif (151) par RF, du type GPS.

7. Satellite selon l'une des revendications 4 à 6, **caractérisé en ce que** le lien RF des moyens de positionnement relatif (151) est utilisé en tant que bus interne de transmission de données entre le corps principal et ledit au moins un objet libre.

8. Satellite selon l'une des revendications 1 à 7, **caractérisé en ce qu'**un pseudo-satellite (30), dénommé "satellite-gueuse", est utilisé dans l'espace libre pour absorber les incréments/décréments de moments cinétiques embarqués dans le système véhicule {corps principal - objets libres}.

9. Satellite selon l'une des revendications 1 à 8, **caractérisé en ce qu'**il comporte plusieurs objets libres (3,3',...) et **en ce que** la gestion de contrôle de position de ces objets libres consiste à créer un champ magnétique pulsé et à, alternativement, allumer et éteindre les actionneurs électromagnétiques respectifs de chaque objet libre suffisamment rapidement pour que l'inertie respective des objets libres rende le pointage insensible à ce pilotage.

10. Satellite selon l'une des revendications 1 à 9, **caractérisé en ce qu'**il comporte plusieurs objets libres (3,3',...) et **en ce qu'**au lancement, les objets libres sont empilés avec des mécanismes de fixation et de gerbage du type à verrouillages électromagnétiques.

**Claims**

1. Satellite (1) comprising a main body (2) and further comprising, in orbit:

   - at least one free object (3) floating in space including a portion of the payload (4) transferred from the main body, the free object being restricted to a precise position and attitude relative to the main body,
   - means (6, 7, 10, 14, 18, 21, 17, 22) for generating an electromagnetic force and an electromagnetic torque for controlling the position and the attitude of the free object in accordance with a master-slave relationship; **characterized in that** each element of the system {main body-free objects} is charged with an identical quantity of electric charge, the effect of which is to produce a repulsive force at short range, this repulsive force being intended to dwindle and to become negligible when the elements are a predetermined distance apart and will not interfere with the electromagnetic control forces, this arrangement of charge generating a short-range passive anticollision system based on electrostatic self-repulsion.

2. Satellite according to Claim 1, **characterized in that** said payload portion of the free object is reduced to means for reflecting rays in the visible, ultraviolet or infrared, spectrum, of the mirror type, and/or in the invisible spectrum, of the electromagnetic beam transmission antenna type.

3. Satellite according to one of Claims 1 and 2, **characterized in that** said main body includes means providing "intelligent" functions of the type belonging to the group {central computer, backing store and computation power, communication with the Earth, payload other than that portion of said payload on board the free object and associated data processing, data storage, synchronization, FDIR}.

4. Satellite according to one of Claims 1 to 3, **characterized in that**:

   - said free object includes means (16, 16, 140) for locating said free object, at least one first electromagnetic actuator (6) including at least one first electromagnetic coil (6) adapted to generate an electromagnetic force and an electromagnetic torque, at least one magnetometer (7) for measuring local magnetic field information, and means (20, 152) for telecommunication of said local magnetic field information,
   - said main body includes a central computer (18) for determining the current (1) to be injected into said coil (6) to correct said electromagnetic force and said electromagnetic torque as a function of the required position and of the attitude of the free object.

5. Satellite according to Claim 4, **characterized in that** said main body itself includes at least one coarse inertial actuator (23), for example based on thrusters, and at least one electromagnetic actuator (10) including at least one second electromagnetic coil (10) for generating its own electromagnetic force and electromagnetic torque.

6. Satellite according to Claim 4 or 5, **characterized in that** said free object location means (15) include means for receiving information from a star tracker to determine the inertial position of said free object and RF relative positioning means (151) of the GPS type.

7. Satellite according to one of Claims 4 to 6, **characterized in that** the RF link of said relative positioning means (151) is used as an internal data transmission bus between said main body and said at least one free object.

8. Satellite according to one of Claims 1 to 7, **characterized in that** a pseudo-satellite (30) also known as a "beggar-satellite" is used in free space to absorb onboard increments/decrements of momentum in the {main body - free objects} satellite system.

9. Satellite according to one of Claims 1 to 8, **characterized in that** it comprises a plurality of free objects (3, 3' ...) and **in that** the position of said free objects is controlled by creating a pulsed magnetic field and alternately turning the respective electromagnetic actuators of each free object on and off sufficiently rapidly for the respective inertias of said free objects to render pointing insensitive to such control.

10. Satellite according to one of Claims 1 to 9, **characterized in that** it includes a plurality of free objects (3, 3', ...) which, at launch, are stacked with fixing and stacking mechanisms of the electromagnetic locking type.

**Patentansprüche**

1. Satellit (1) mit einem Hauptkörper (2), wobei der Satellit außerdem in der Umlaufbahn aufweist:

   - mindestens ein im Raum schwebendes freies Objekt (3), das einen Teil der Nutzlast (4) enthält, die vom Hauptkörper ausgelagert ist, wobei dem freien Objekt eine präzise Position und Fluglage bezüglich des Hauptkörpers auferlegt ist,
   - Einrichtungen (6, 7, 10, 14, 18, 21, 17, 22), zur Erzeugung einer elektromagnetischen Kraft und eines elektromagnetischen Drehmoments, um die Position und die Fluglage des freien Objekts gemäß einer Master-Slave-Beziehung steuern zu können, **dadurch gekennzeichnet, dass** jedes Element des Systems {Hauptkörper - freie Objekte} mit der gleichen Menge elektrischer Ladung geladen ist, was zur Wirkung hat, in geringem Abstand eine Abstoßkraft zu erzeugen, wobei diese Abstoßkraft dazu bestimmt ist, zu schwinden und vernachlässigbar zu werden, wenn die Elemente um einen vorbestimmten Abstand voneinander entfernt sind, und nicht mit den elektromagnetischen Kontrollkräften interferiert, wobei diese Ladungsanordnung ein passives Antikollisionssystem in kurzem Abstand erzeugt, das auf der elektrostatischen Selbstabstoßung basiert.

2. Satellit nach Anspruch 1, **dadurch gekennzeichnet, dass** der Nutzlastteil des freien Objekts auf die Einrichtungen zur Gewährleistung der Reflektion von Strahlen des sichtbaren, Ultraviolett- oder Infrarot-Spektrums vom Typ Spiegel, und/oder des unsichtbaren Spektrums vom Typ Übertragungsantenne von elektromagnetischen Strahlen reduziert ist.

3. Satellit nach einem der Ansprüche 1 bis 2, **dadurch gekennzeichnet, dass** der Hauptkörper die Einrichtungen aufweist, um die "intelligenten" Funktionen des Typs zu gewährleisten, die zu der Gruppe {zentraler Rechner, Massespeicher und Rechenleistung, Kommunikationen mit der Erde, andere Nutzlast als die an Bord des freien Objekts befindliche und Verarbeitung zugeordneter Daten, Speicherung der Daten, Synchronisation, FDIR} gehören.

4. Satellit nach einem der Ansprüche 1 bis 3, **dadurch gekennzeichnet, dass**:

   - das freie Objekt Einrichtungen (15, 16, 140) zur Lokalisierung des freien Objekts, mindestens einen ersten elektromagnetischen Stellantrieb (6), der mindestens eine erste elektromagnetische Spule (6) aufweist, die dazu bestimmt ist, eine elektromagnetische Kraft und ein elektromagnetisches Drehmoment zu erzeugen, mindestens ein Magnetometer (7), um eine lokale Magnetfeldinformation zu messen, und Einrichtungen (20, 152) zur Fernübertragung der lokalen Magnetfeldinformation aufweist,
   - der Hauptkörper einen zentralen Rechner (18) aufweist, um den Strom (I) zu bestimmen, der in die Spule (6) eingespeist werden soll, um die elektromagnetische Kraft und das elektromagnetische Drehmoment in Abhängigkeit von der gewünschten Position und Fluglage des freien Objekts zu korrigieren.

5. Satellit nach Anspruch 4, **dadurch gekennzeichnet, dass** der Hauptkörper selbst mindestens einen groben und inertialen Stellantrieb (23), zum Beispiel auf der Basis von Düsen, und mindestens einen elektromagnetischen Stellantrieb (10) aufweist, der mindestens eine zweite elektromagnetische Spule (10) aufweist, die dazu bestimmt ist, eine eigene elektromagnetische Kraft und ein eigenes elektromagnetisches Drehmoment zu erzeugen.

6. Satellit nach Anspruch 4 oder 5, **dadurch gekennzeichnet, dass** die Einrichtungen (15) zur Lokalisierung des freien Objekts Einrichtungen für den Empfang von Informationen, die von einem Sternsensor stammen, um die Inertialposition des freien Objekts zu kennen, und Einrichtungen zur relativen Positionierung (151) durch RF vom Typ GPS aufweisen.

7. Satellit nach einem der Ansprüche 4 bis 6, **dadurch gekennzeichnet, dass** das RF-Link der Einrichtungen zur relativen Positionierung (151) als interner Übertragungsbus von Daten zwischen dem Hauptkörper und dem mindestens einen freien Objekt genutzt wird.

8. Satellit nach einem der Ansprüche 1 bis 7, **dadurch gekennzeichnet, dass** ein Pseudo-Satellit (30}, "Ausgleichsgewicht-Satellit" genannt, im freien Raum verwendet wird, um die Inkremente/Dekremente von Drall an Bord des Fahrzeugsystems {Hauptkörper - freie Objekte} zu absorbieren.

9. Satellit nach einem der Ansprüche 1 bis 8, **dadurch gekennzeichnet, dass** er mehrere freie Objekte (3, 3', ...) aufweist, und dass die Positionsüberwachungsverwaltung dieser freien Objekte darin besteht, ein gepulstes Magnetfeld zu erzeugen und abwechselnd die jeweiligen elektromagnetischen Stellantriebe jedes freien Objekts schnell genug ein- und auszuschalten, damit die Trägheit der freien Objekte das Ausrichten für diese Steuerung unempfindlich macht.

10. Satellit nach einem der Ansprüche 1 bis 9, **dadurch gekennzeichnet, dass** er mehrere freie Objekte (3, 3', ...) aufweist, und dass beim Abschuss die freien Objekte mit Befestigungs- und Stapelmechanismen vom Typ mit elektromagnetischer Verriegelung gestapelt werden.

## FIG_1

Flux d'entrée    Champ B      1      Champ B    Flux d'entrée

9   2

Antenne bande S

Métrologie RF et optique

Bouclier solaire

Métrologie RF et optique

3   Objet libre 1

12   Corps principal à actionneurs électromagnétiques

Objet libre 2   3'

EP 1 582 461 B1

FIG_2

## RÉFÉRENCES CITÉES DANS LA DESCRIPTION

**Documents brevets cités dans la description**

- US 6454215 B

**Littérature non-brevet citée dans la description**

- **Gérard Maral ; Michel Bousquet.** Satellite Communications Systems. John Wiley & Sons